Europäisches Patentamt

European Patent Office

Office européen des brevets

(19)

(11) Numéro de publication : **0 292 384 B1**

## (12) FASCICULE DE BREVET EUROPEEN

(45) Date de publication du fascicule du brevet :
17.07.91 Bulletin 91/29

(51) Int. Cl.⁵ : **B25J 15/04, B25J 3/00**

(21) Numéro de dépôt : **88401204.8**

(22) Date de dépôt : **18.05.88**

(54) **Dispositif de raccordement déconnectable d'une grenouillère sur un bras esclave de télémanipulateur.**

(30) Priorité : **20.05.87 FR 8707068**

(43) Date de publication de la demande :
**23.11.88 Bulletin 88/47**

(45) Mention de la délivrance du brevet :
**17.07.91 Bulletin 91/29**

(84) Etats contractants désignés :
**BE DE GB IT**

(56) Documents cités :
**EP-A- 0 104 118**

(73) Titulaire : **SOCIETE NOUVELLE D'EXPLOITATION LA CALHENE**
**1, rue du Petit Clamart**
**F-78140 Velizy-Villacoublay (FR)**

(72) Inventeur : **Teillauchet, Eric**
**36, rue de la Vallée du Loir Areines**
**F-41100 Vendôme (FR)**
Inventeur : **Bandiera, Angelo**
**1, rue des Etats-Unis**
**F-41100 Vendôme (FR)**

(74) Mandataire : **Mongrédien, André et al**
**c/o BREVATOME 25, rue de Ponthieu**
**F-75008 Paris (FR)**

## Description

L'invention concerne un dispositif permettant de raccorder de façon déconnectable une genouillère portant une pince de préhension à l'extrémité d'un bras esclave d'un télémanipulateur.

Dans le document FR-A-2 533 159, on a décrit un dispositif de raccordement déconnectable comprenant deux loquets basculants montés à l'extrémité du bras esclave et dont le pivotement leur permet de venir encercler deux doigts fixés selon un axe commun de part et d'autre du boîtier de la genouillère. Lorsque la genouillère est raccordée sur le bras, des pignons menants et menés montés respectivement à l'extrémité du bras et dans la genouillère sont engrénés les uns dans les autres pour transmettre à la pince les mouvements d'orientation et de serrage.

Dans ce dispositif de raccordement connu, les loquets remplissent à la fois la fonction de maintien de la genouillère à l'extrémité du bras esclave et la fonction de verrouillage entre ces deux pièces. Le poids de la genouillère et de la pince qu'elle supporte est donc transmis au bras esclave au travers des loquets basculants. Par conséquent, il existe nécessairement un certain jeu fonctionnel entre le bras esclave et la genouillère, dans le plan médian du bras contenant les loquets et les doigts. Etant donné que c'est également dans ce plan médian que s'effectue l'engrènement des pignons menants et menés, le jeu fonctionnel se retrouve intégralement entre ces pignons menants et menés. Il existe donc un risque important pour qu'une usure prématurée des pignons se produise lors du fonctionnement du télémanipulateur.

Par ailleurs, étant donné que les loquets basculants assurent à la fois les fonctions de maintien et de verrouillage de la genouillère, une chute accidentelle de cette dernière peut se produire en cas de rupture des ressorts de blocage des loquets en position de verrouillage.

Enfin, pour réaliser la connexion et la déconnexion de la genouillère, il est nécessaire de faire pivoter les loquets basculants dans deux directions opposées. La station de déconnexion sur laquelle on vient placer la genouillère et sa pince doit par conséquent être équipée d'un mécanisme de verrouillage et de déverrouillage pouvant occuper deux positions selon l'opération à réaliser. Cette station de déconnexion est donc relativement compliquée et coûteuse.

La présente invention a précisément pour objet un dispositif de raccordement déconnectable dans lequel les fonctions de maintien et de verrouillage sont dissociées, la fonction de maintien étant assurée par des organes fixes entre lesquels le jeu peut être très faible et qui sont disposés de telle sorte que la genouillère soit automatiquement plaquée contre l'extrémité du bras esclave sous l'effet du porte-à-faux, pour la majorité des orientations de la pince, ce qui permet de réduire le jeu existant entre les pignons menants et menés, de rendre tout risque de décrochage automatique de la genouillère pratiquement impossible et de simplifier la station de déconnexion.

Conformément à l'invention, ce résultat est obtenu au moyen d'un dispositif de raccordement déconnectable d'une genouillère sur un bras esclave de télémanipulateur, ce bras esclave comprenant un fût présentant un axe longitudinal et une extrémité ouverte dans laquelle sont montés des pignons menants d'axe perpendiculaire audit axe longitudinal, et la genouillère comprenant un boîtier supportant des pignons menés autour d'un axe transversal adjacent à une ouverture du boîtier, et une tige support de pince d'axe orthogonal audit axe transversal, montée dans le boîtier par un axe d'articulation parallèle audit axe transversal, le dispositif de raccordement reliant le boîtier au fût de telle sorte que l'ouverture du boîtier soit adjacente à l'extrémité ouverte du fût, les pignons menants et menés engrénés deux à deux avec leurs axes orientés parallèlement et situés dans un plan contenant l'axe longitudinal du bras, et l'axe d'articulation de la tige support de pince situé d'un côté de ce plan, ce dispositif étant caractérisé en ce qu'il comprend :

– au moins une broche fixée au boîtier de la genouillère, selon un axe parallèle à l'axe d'articulation de la tige support de pince et situé du même côté que cet axe d'articulation par rapport audit plan, au-delà de ladite ouverture ;

– au moins un crochet rigide fixé sur le fût et faisant saillie au-delà de son extrémité ouverte, pour venir encercler ladite broche sous l'effet d'un pivotement relatif entre la genouillère et l'extrémité du bras autour de l'axe de la broche ; et

– des moyens de verrouillage du boîtier sur l'extrémité du fût, situés du côté opposé par rapport audit plan.

Dans ce dispositif, les broches et les crochets sont des organes fixes qui assurent le maintien de la genouillère portant la pince à l'extrémité du bras esclave. Le jeu entre ces organes peut donc être sensiblement réduit par rapport au jeu existant entre les loquets et les doigts dans le document FR-A-2 533 159.

En outre, lorsque la pince est orientée vers l'avant, c'est-à-dire du même côté du plan contenant les axes des pignons menants et menés que l'axe d'articulation, ce qui correspond aux conditions de travail les plus courantes, la genouillère, la pince et la charge que supporte éventuellement cette dernière tendent à pivoter autour des broches sous l'effet du porte-à-faux, dans le sens correspondant au plaquage de la genouillère contre l'extrémité du bras esclave. Le jeu existant entre les pignons menants et menés est alors approximativement égal à la moitié du jeu déjà très faible existant entre les crochets et les broches. Par conséquent, l'usure de ces pignons due au jeu est presque inexistante.

Dans le cas beaucoup plus rare où la pince est orientée vers l'arrière, la genouillère, la pince et la charge éventuelle tendent à tourner en sens inverse autour des broches. Le jeu maximum est alors déterminé par les moyens de verrouillage et il correspond approximativement à celui qui existe dans le document FR-A-2 533 159 entre les loquets basculants et les doigts. Toutefois, ce jeu est ici encore divisé approximativement par deux au droit des pignons menants et menés, de sorte que, même dans ces conditions plus défavorables, les risques d'usure des pignons sont moins importants que dans le dispositif décrit dans le document FR-A-2 533 159.

Dans un mode de réalisation préféré de l'invention, les moyens de verrouillage comprennent un loquet articulé sur le boîtier, autour d'un axe parallèle à l'axe d'articulation de la tige support de pince, ce loquet présentant une extrémité recourbée en saillie, apte à pénétrer dans un logement formé à l'extrémité du fût, sous l'action de moyens élastiques.

De préférence, le dispositif selon l'invention comprend deux broches faisant saillie selon un axe commun de part et d'autre du boîtier et deux crochets fixés sur le fût pour venir encercler chacune desdites broches.

Selon un autre aspect de l'invention, chacun des crochets est tourné du côté opposé audit plan et délimite un évidement approximativement semi-circulaire apte à encercler une partie de la broche opposée à ladite ouverture.

Dans un mode de réalisation de l'invention permettant la connexion et la déconnexion automatique de la genouillère, le boîtier comporte des organes de positionnement de cette dernière dans un berceau orientable d'une station de déconnexion.

Ce berceau orientable comprend de préférence une butée dégageant automatiquement l'extrémité recourbée du loquet dudit logement à l'encontre des moyens élastiques, lorsque les organes de positionnement sont placés dans le berceau.

Un mode de réalisation préféré de l'invention va maintenant être décrit, à titre d'exemple nullement limitatif, en se référant aux dessins annexés dans lesquels :

– la figure 1 est une vue de côté représentant très schématiquement l'extrémité du bras esclave d'un télémanipulateur articulé et l'ensemble pince-genouillère fixé à l'extrémité de ce bras esclave au moyen du dispositif de raccordement déconnectable conforme à l'invention ;

– la figure 2 est une vue en coupe longitudinale selon la ligne II-II de la figure 1, représentant à plus grande échelle l'extrémité du bras esclave, ainsi que la genouillère ;

– la figure 3 est une vue de côté schématique représentant, en coupe partielle et à plus grande échelle, l'extrémité du bras esclave et l'ensemble pince-genouillère lors de la mise en place de cet ensemble sur une station de déconnexion appropriée ;

– la figure 4 est une vue de dessous, en coupe partielle, représentant le berceau de la station de déconnexion de la figure 3 ; et

– les figures 5a à 5c sont des vues de côté représentant de façon schématique différentes étapes de la mise en place de l'ensemble pince-genouillère sur la station de déconnexion, puis de la déconnexion de cet ensemble par rapport à l'extrémité du bras esclave.

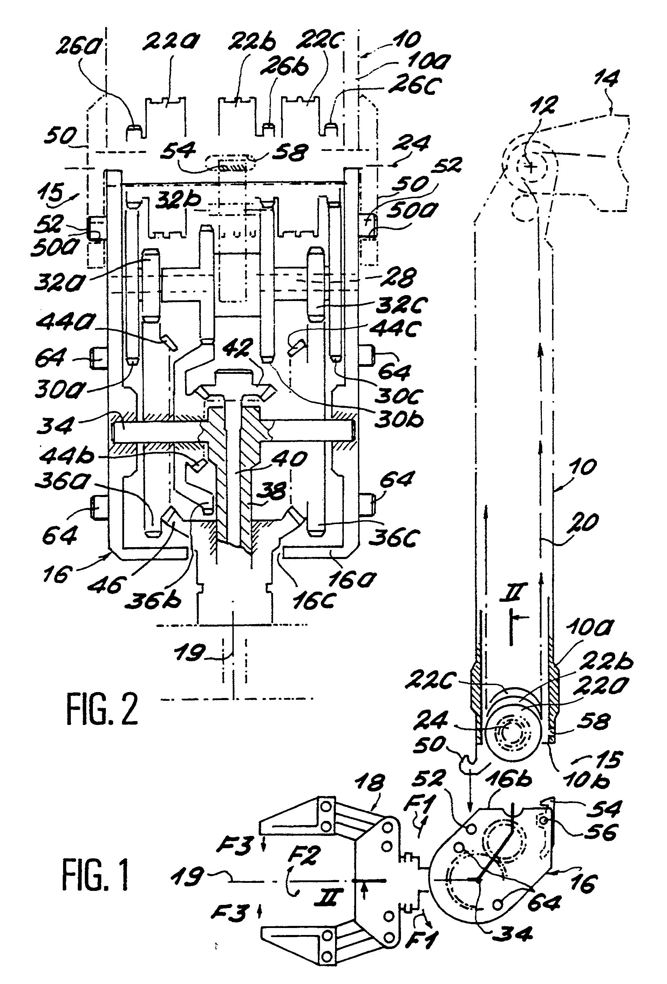

Sur la figure 1, on a représenté de façon très schématique le segment avant 10 du bras esclave d'un télémanipulateur articulé. Ce segment avant 10 est articulé par un axe de coude 12 sur un segment arrière 14, lui-même articulé par un axe d'épaule sur un bloc support monté à l'intérieur d'une cellule (non représentée).

Conformément à l'invention, un dispositif de raccordement déconnectable 15 permet de monter et de démonter à distance une genouillère 16 à l'extrémité libre du bras esclave 10. Cette genouillère 16 supporte elle-même une pince de préhension articulée 18, qui peut être de tout type connu. Cette pince de préhension 18 peut être soit montée à demeure sur la genouillère 16, soit fixée sur cette dernière de façon démontable par tout moyen connu approprié.

Comme on le verra plus en détail ultérieurement, la genouillère 16 permet de faire pivoter la pince de préhension 18 autour d'un axe d'articulation 34 orthogonal à l'axe longitudinal du bras 10 (flèches F1 sur la figure 1) et de faire tourner la pince 18 autour de son axe propre 19 (flèche F2 sur la figure 1). Par ailleurs, la pince de préhension 18 est dotée d'un mouvement de serrage (flèche F3 sur la figure 1).

Comme on l'a illustré très schématiquement sur la figure 1, la transmission à l'intérieur du bras esclave des trois mouvements F1, F2 et F3 s'effectue généralement au moyen de rubans 20 dont les extrémités situées à l'intérieur du bloc support sont fixées sur des cabestans (non représentés) commandés par des moteurs sensibles à des signaux en provenance du bras maître.

A l'extrémité libre du segment 10, chacun des rubans 20 s'enroule sur une poulie. Plus précisément, lorsque trois mouvements sont transmis à la pince comme indiqué précédemment, trois paires de rubans 20 sont logées à l'intérieur du bras esclave, chaque mouvement étant transmis au moyen de deux rubans identiques. Ces trois paires de rubans 20 s'enroulent à l'extrémité inférieure du bras esclave sur trois poulies doubles 22a, 22b et 22c.

Comme l'illustre plus en détail la figure 2, les trois poulies doubles 22a, 22b et 22c sont montées de façon à pouvoir tourner librement sur un axe commun 24 traversant le fût 10a du segment 10 perpendiculairement à son axe et à proximité immédiate du bord 10b de l'extrémité ouverte du fût 10a (figure 1). Chacune des poulies 22a, 22b et 22c est solidarisée d'un pignon menant 26a, 26b et 26c respectivement. Dans l'exemple représenté, les pignons menants ont tous le même diamètre.

Les moyens permettant de transmettre à la pince 18 les mouvements parvenant aux poulies 22a à 22c vont maintenant être décrits en se référant à la figure 2.

La genouillère 16 comprend un boîtier 16a présentant une ouverture dont le bord 16b peut venir s'appliquer contre le bord 10b de l'extrémité ouverte du segment 10 (figure 1). Un axe 28 est monté dans le boîtier 16a, à proximité du bord 16b de l'ouverture, cet axe 28 étant orienté parallèlement à l'axe 24 et dans un plan contenant l'axe longitudinal du segment 10, lorsque les bords 10b et 16b sont maintenus en contact par le dispositif 15 selon l'invention. L'axe 28 supporte de façon tournante trois pignons menés identiques 30a, 30b et 30c qui sont engrénés respectivement sur les pignons menants 26a, 26b et 26c lorsque la genouillère est fixée sur le bras. Chacun des pignons menés 30a, 30b et 30c est solidaire d'un deuxième pignon 32a, 32b et 32c.

Le boîtier 16a de la genouillère supporte également de façon tournante l'axe d'articulation 34 de la pince, cet axe étant disposé parallèlement à l'axe 28 et disposé à une distance donnée, d'un côté du plan contenant les axes 24 et 28 et l'axe longitudinal du segment 10, lorsque la genouillère est raccordée à l'extrémité de ce segment. Sur cet axe d'articulation 34 sont montés de façon tournante trois pignons 36a, 36b et 36c qui sont engrénés respectivement sur les pignons 32a, 32b et 32c.

Une pièce tubulaire 38 est fixée au centre de l'axe 34, de telle sorte que son axe 19 soit perpendiculaire à cet axe 34. Cette pièce tubulaire 38 fait saillie par une fente en arc de cercle 16c formée dans le boîtier 16a de la genouillère, pratiquement à l'opposé du bord 16b. La pièce 38 supporte de façon tournante un arbre 40. Un pignon conique 42 est solidarisé de l'extrémité de l'arbre 40 située à l'intérieur du boîtier de la genouillère. Ce pignon 42 est engréné sur un pignon conique 44b solidaire du pignon 36b.

Par ailleurs, les pignons 36a et 36c sont identiques et disposés symétriquement de part et d'autre de l'axe commun à l'arbre 40 et à la pièce tubulaire 38. De plus, ces pignons sont solidaires respectivement d'un pignon conique 44a et d'un pignon conique 44c, ces deux pignons coniques étant identiques et se faisant face. Les pignons coniques 44a et 44c sont engrénés sur un pignon conique 46 solidaire d'un embout tubulaire 48 monté de façon tournante sur la pièce tubulaire 38.

L'arbre tournant 40, la pièce tubulaire 38 et l'embout tubulaire 48 sont disposés coaxialement selon l'axe 19 et comprennent tous trois une partie faisant saillie hors du boîtier 16a de la genouillère, par l'ouverture en arc de cercle 16c. Ils constituent ainsi une tige support sur laquelle est fixée la pince de préhension 18, par tout moyen approprié, démontable ou non, comme on l'a mentionné précédemment.

Pour la bonne compréhension de l'invention, on notera que le corps de la pince 18 est fixé sur l'embout tubulaire 48 et que l'arbre tournant 40 sert à entraîner le mécanisme interne à la pince assurant le serrage et le désserrage de ses mâchoires (flèches F3 sur la figure 1).

Lorsque l'ensemble constitué par la pince 18 et la genouillère 16 est connecté à l'extrémité du bras 10 à l'aide du dispositif 15 selon l'invention, les mouvements d'orientation F1 et F2 et de serrage F3 de la pince 18 sont transmis des rubans 20 à la genouillère et à la pince, par l'intermédiaire des mécanismes qui viennent d'être décrits, de la façon suivante.

Lorsque les rubans 20 enroulés sur les poulies 22a et 22c sont actionnés simultanément dans le même sens et à la même vitesse, les pignons coniques 44a et 44c sont eux-mêmes entraînés en rotation dans le même sens et à la même vitesse par l'intermédiaire des chaînes cinématiques formées, d'une part, par les pignons 26a, 30a, 32a et 36a et, d'autre part, par les pignons 26c, 30c, 32c et 36c. Etant donné que ces pignons coniques 44a et 44c sont engrénés sur le pignon 46 en des points diamétralement opposés de ce dernier, celui-ci ne tourne pas autour de son axe propre, mais la tige formée par l'arbre 40, la pièce 38 et l'embout 48, ainsi que la pince supportée par cette tige, sont entraînées en pivotement autour de l'axe 34. On obtient ainsi le mouvement F1 sur la figure 1.

Au contraire, lorsque les rubans 20 passant sur les poulies 22a et 22c sont entraînés en sens inverse et à la même vitesse, les chaînes cinématiques de pignons précédemment mentionnées conduisent à un mouvement de rotation en sens inverse et à la même vitesse des pignons coniques 44a et 44c. Dans ce cas, le pignon 46 est entraîné en rotation autour de son axe propre, de même que l'embout 48 qui lui est solidaire et que la pince 18 montée sur cet embout. Le mouvement de pivotement de la pince 18 autour de son axe propre, désigné par F2 sur la figure 1, est ainsi obtenu.

Enfin, lorsque le ruban 20 enroulé sur la poulie centrale 22b se déplace, cette poulie entraîne en rotation le pignon conique 44b, par l'intermédiaire de la chaîne cinématique formée par les pignons 26b, 30b, 32 et 36b. Le pignon 44b étant engréné sur le pignon 42 solidaire de l'arbre 40, celui-ci est donc entraîné en rotation autour de son axe propre. Le mouvement de serrage F3 de la pince est ainsi obtenu.

Bien entendu, dans la pratique, ces différents mouvements sont généralement combinés.

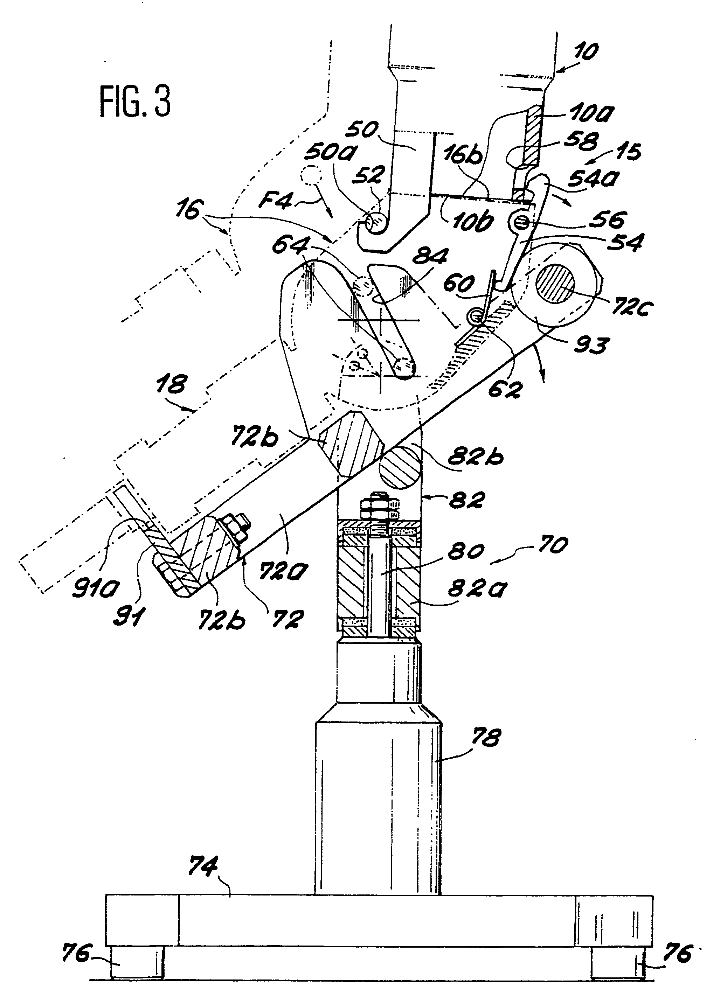

Le dispositif de raccordement déconnectable 15 permettant conformément à l'invention de fixer la genouillère 16 à l'extrémité ouverte du fût 10a du bras esclave va maintenant être décrit en se référant aux figures 2 et 3.

A l'extrémité ouverte du bras esclave, ce dispositif de raccordement comprend deux crochets rigides 50 fixés sur le fût 10a, à l'extérieur de celui-ci, de façon à faire saillie au-delà de son extrémité ouverte. Chacun des crochets 50 est réalisé sous la forme d'une plaque métallique approximativement plane, disposée dans un plan perpendiculaire à l'axe 24 et de part et d'autre du fût 10a. Comme on le voit mieux sur la figure 3, les extrémités des crochets 50 faisant saillie au-delà de l'extrémité ouverte du fût sont repliées vers l'extérieur et vers le haut en considérant la figure 3, pour former des évidements approximativement semi-circulaires 50a dont l'axe commun est parallèle à l'axe 24. Ces évidements 50a sont tangents à l'enveloppe extérieure de l'extrémité du fût 10a et situés à l'extérieur de cette enveloppe. Les évidements 50a sont donc décalés par rapport au plan passant par l'axe longitudinal du fût et par les axes 24 et 28 des pignons, du même côté que l'axe d'articulation 34 de la genouillère, lorsque celle-ci est montée à l'extrémité du bras esclave.

Le dispositif 15 de raccordement déconnectable selon l'invention comprend de plus deux broches 52 fixées de part et d'autre du boîtier 16a de la genouillère, selon un axe commun parallèle aux axes 28 et 34, à proximité du bord 16b de l'ouverture formée dans le boîtier 16a. Le diamètre des broches 52 est approximativement égal à celui des évidements 50a des crochets. De plus, les deux broches 52 sont situées en un emplacement tel que chacune d'entre elle est placée dans l'évidement 50a de l'un des crochets 50 lorsque la genouillère est raccordée à l'extrémité du bras esclave. Les deux broches 50 sont donc décalées du même côté que l'axe d'articulation 34 par rapport au plan contenant les axes 24 et 28 ainsi que l'axe longitudinal du segment 10, la distance séparant l'axe de ces broches de ce plan étant égale à la distance séparant l'axe géométrique des évidements semi-circulaires 50a du même plan. De plus, la distance séparant l'axe des broches 52 du plan contenant le bord 10b de l'extrémité ouverte du segment 10 est égale à la distance séparant l'axe des évidements 50a du plan contenant le bord 16b de l'ouverture du boîtier 16a de la genouillère.

L'ensemble formé par les crochets 50 et par les broches 52 permet ainsi d'assurer le maintien rigide de la genouillère à l'extrémité du bras esclave, avec des tolérances relativement étroites puisque chacune de ces pièces est fixe.

De plus, la liaison ainsi formée entre la genouillère 16 et l'extrémité du bras esclave est une liaison pivotante autour des broches 52, qui sont disposées du côté de la genouillère vers lequel est normalement orientée la pince 18, dans la majorité des conditions de travail. Le centre de gravité de l'ensemble pince-genouillère-charge est donc généralement décalé par rapport à l'axe de pivotement ainsi formé de façon à faire pivoter la genouillère autour de cet axe dans le sens inverse des aiguilles d'une montre en considérant la figure 3. Le bord 16b de l'ouverture formée sur le boîtier de la genouillère est donc naturellement plaqué contre le bord 10b de l'extrémité ouverte du fût 10a.

Le recours à un moyen de verrouillage de la genouillère à l'extrémité du bras esclave se révèle cependant nécessaire lorsque la pince est basculée au maximum dans le sens inverse des aiguilles d'une montre en considérant la figure 3. En effet, l'ensemble pince-genouillère-charge tend alors à pivoter en sens inverse autour des broches 50.

Conformément à l'invention, le dispositif de raccordement déconnectable 15 comprend donc également des moyens de verrouillage constitués dans le mode de réalisation représenté par un loquet 54 monté pivotant dans le boîtier 16a de la genouillère autour d'un axe 56 parallèle aux axes 28 et 34. Ce loquet 54 est situé de l'autre côté du plan passant par l'axe du fût et par les axes 24 et 28, par rapport aux broches 52. Le loquet 54 est monté approximativement parallèlement à l'axe du fût, dans une encoche formée à cet effet dans le boîtier 16a de la genouillère, à proximité du bord 16b de l'ouverture formée dans ce boîtier. Au-delà du bord 16b, le loquet 54 présente une extrémité 54a recourbée vers l'intérieur de l'ouverture. Lorsque le bord 10b de l'extrémité ouverte du fût 10a est en appui sur ce bord 16b de l'ouverture du boîtier 16a, l'extrémité recourbée 54a du loquet 54 pénètre dans un logement 58 formé à cet effet dans le fût 10a à proximité de son extrémité ouverte.

Un ressort 60 tel qu'un ressort de torsion monté sur un axe 62 parallèle aux axes 28 et 34 à l'intérieur du boîtier de la genouillère, est en appui sur l'extrémité opposée du loquet 54 afin de faire pivoter ce dernier autour de son axe 56, pour amener automatiquement son extrémité recourbée 54a dans le logement 58.

Dans les conditions les plus courantes de manipulation pour lesquelles la pince 18 est orientée comme l'illustre la figure 3, avec un débattement maximum vers le haut ou vers le bas d'environ 30°, la répartition des masses par rapport à l'axe de pivotement constitué par les broches 52 reçues dans les crochets 50 tend à faire pivoter l'ensemble genouillère-pince dans le sens inverse des aiguilles d'une montre en considérant la figure 3. Etant donné que le jeu entre les broches 52 et les crochets 50 peut être très réduit puisque ces pièces sont fixes, le jeu existant entre les engrenages menés 26a à 26c et menants 30a à 30c, qui est approximativement égal à la moitié de ce jeu déjà très faible, est donc négligeable. Dans les conditions usuelles d'utilisation du télémanipulateur, le dispositif de raccordement selon l'invention assure donc des conditions d'engrènement optimales entre les deux jeux d'engrenages. L'usure de ces engrenages est donc réduite au minimum.

Dans les conditions les plus défavorables et beaucoup plus rares pour lesquelles la pince 18 est inclinée au maximum dans le sens inverse des aiguilles d'une montre en considérant la figure 3, l'ensemble pince-genouillère tend à pivoter en sens inverse autour de l'axe formé par les broches 52. Le jeu le plus important est alors formé entre l'extrémité recourbée 54a du loquet 54 et le logement 58 dans lequel cette extrémité recourbée est reçue. Cependant, compte tenu de la disposition décalée vers l'extérieur du loquet 54 par rapport au plan contenant les axes 24 et 28 des engrenages menants 26a à 26c et menés 30a à 30c, le jeu existant entre ces engrenages est pratiquement égal à la moitié de celui qui existe entre le loquet 54 et le logement 58. Un jeu relativement faible est donc également garanti dans ces conditions, de sorte que l'usure des engrenages est très sensiblement réduite par rapport aux dispositifs de raccordement existants.

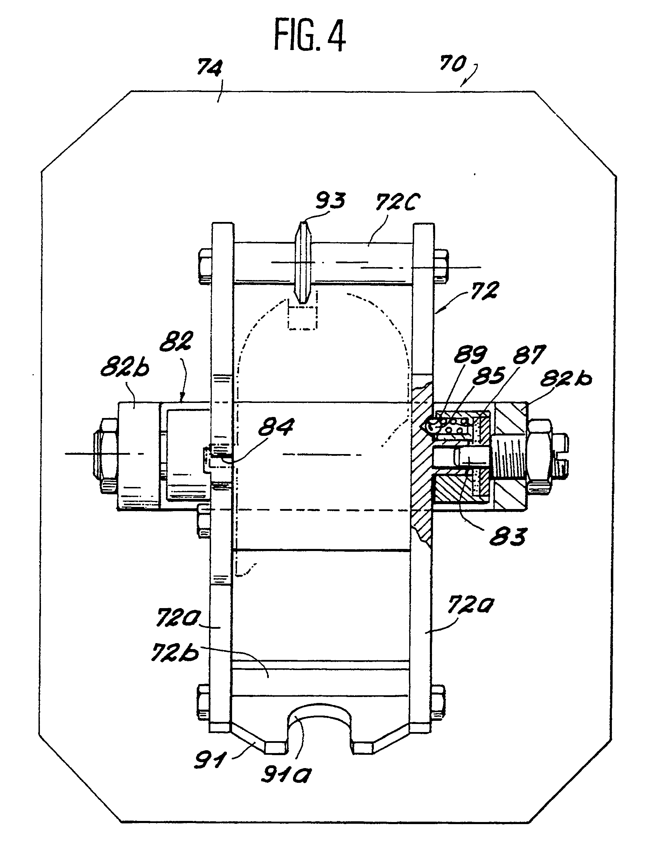

Sur les figures 3 et 4, on a également représenté une station de déconnexion 70 conçue pour assurer automatiquement la connexion et la déconnexion d'un ensemble pince-genouillère à l'extrémité d'un bras esclave à l'aide du dispositif de raccordement 15 qui vient d'être décrit.

Afin de permettre son positionnement automatique sur la station de déconnexion, le boîtier 16a de la genouillère comporte alors des organes de positionnement sur ses deux faces opposées portant les broches 52. Ces organes de positionnement sont constitués par deux paires de pions 64 dont les axes sont orientés parallèlement aux axes 28 et 34 et disposés dans un plan passant approximativement par l'axe 34 et de part et d'autre de ce dernier. Le plan contenant les pions 64 définit la direction d'introduction de la genouillère 16 sur un berceau orientable 72 de la station 70 (flèche F4 sur la figure 3).

Plus précisément, la station de déconnexion 70 comprend un socle 74 reposant par des pieds 76 sur une surface plane appropriée prévue à cet effet à l'intérieur de la cellule. Une colonne 78 fait saillie verticalement vers le haut à partir du socle horizontal 74. A son extrémité supérieure, la colonne 78 porte un pivot vertical 80 supportant de façon tournante l'embase 82a d'une pièce 82 en forme de U dont les deux bras 82b font saillie verticalement vers le haut.

Comme l'illustre la figure 4, à leurs extrémités supérieures les bras 82b supportent de façon pivotante le berceau 72 autour d'un axe horizontal. Cet axe est matérialisé par deux pivots 83 fixés aux extrémités des bras 82b. Des billes 85 sont appliquées par des ressorts 87 contre le berceau 72, pour maintenir ce dernier dans deux orientations privilégiées respectivement de déconnexion et de connexion, lorsque les billes pénètrent dans des trous coniques 89 formé à cet effet sur le berceau 72.

Le berceau 72 comprend deux flancs identiques 72a sur lesquels sont formés les trous 89 et qui sont reliés par des entretoises 72b et par un excentrique 72c à une extrémité. L'entretoise 72b située à l'extrémité opposée supporte une plaque 91 pourvue d'une encoche 91a apte à recevoir la pince 18. L'excentrique 72c porte un galet 93 constituant une butée qui vient en appui sur l'extrémité du loquet 54 opposée à l'extrémité recourbée 54a, pour dégager cette dernière du logement 58 lorsque la genouillère est placée sur le berceau.

En se reportant à la figure 3, on voit que chacun des flancs 72a du berceau 72 présente une fente 84 dans laquelle sont reçus les pions 64 faisant saillie sur les flancs opposés du boîtier de la genouillère.

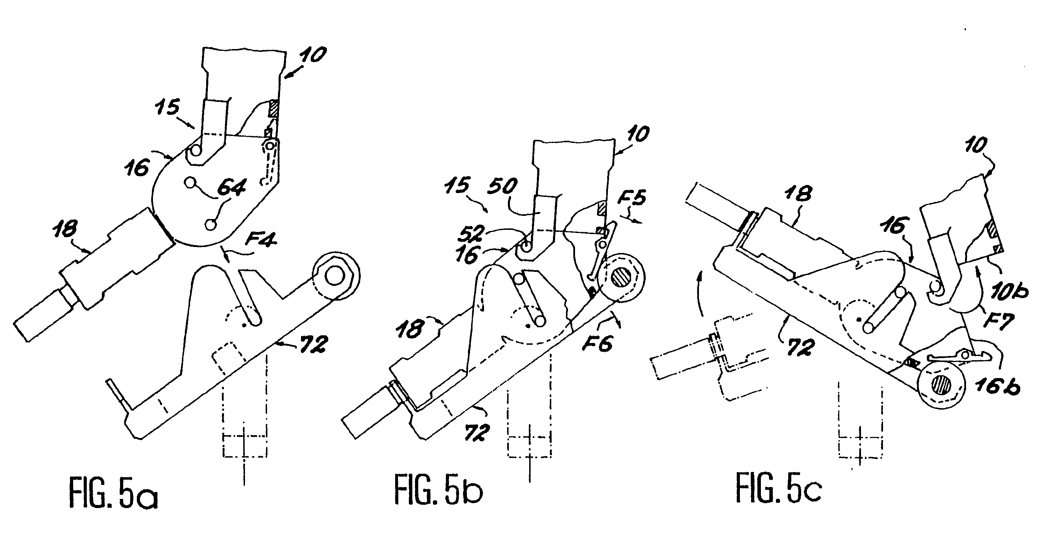

Lorsqu'un opérateur désire déconnecter un ensemble pince-genouillère fixé à l'extrémité du bras esclave d'un télémanipulateur à l'aide du dispositif 15 conforme à l'invention, il oriente le berceau 72 de la manière représentée sur la figure 5a, qui est repérée par la pénétration des billes 85 dans deux trous 89 du berceau. La pince étant dans sa position médiane comme l'illustre la figure 5a, l'introduction des pions 64 dans les fentes 84 du berceau s'effectue alors en translatant l'ensemble pince-genouillère dans la direction de la flèche F4 sur la figure 5a.

Lorsque cette introduction est terminée (figure 5b), l'extrémité recourbée du loquet 54 est dégagée du logement 58 par le galet 93. L'opérateur manoeuvre alors l'extrémité du bras esclave en arrière et vers le bas (flèche F5), de façon à faire pivoter d'environ 60° le berceau orientable 72 jusque dans la position représentée sur la figure 5c (flèche F6 sur la figure 5). Au cours de ce mouvement, il se produit un pivotement relatif entre la genouillère 16 et l'extrémité du bras esclave, autour de l'axe formé entre les broches 52 et les crochets 50. La position de déconnexion du berceau 72 est repérée par la pénétration des billes 85 dans deux autres trous 89. Dans cette position, les bords 10b et 16b font entre eux un angle d'environ 90°, tel que les crochets 50 peuvent être dégagés des broches 52, comme l'illustre la flèche F7 sur la figure 5c.

Au contraire, lorsqu'un opérateur désire venir fixer un ensemble-pince genouillère à l'extrémité du bras esclave d'un télémanipulateur, il effectue dans l'ordre inverse les opérations qui viennent d'être décrites.

Plus précisément, le berceau 72 étant resté dans la position de la figure 5c, l'opérateur vient placer les crochets 50 sur les broches 52, puis il déplace vers le haut l'extrémité du télémanipulateur pour faire basculer le berceau orientable 72 dans la position de la figure 5b.

En effectuant ensuite une translation vers le haut de l'extrémité du bras esclave du télémanipulateur parallèlement à la direction alors définie par les fentes 84, il dégage l'ensemble pince-genouillère du berceau. Ce mouvement s'accompagne d'une libération du loquet 54 qui est alors automatiquement amené dans sa position de verrouillage par le ressort 60 (figure 3).

En plus des avantages précédemment mentionnés, la description de la station de déconnexion qui vient d'être faite ainsi que de son utilisation montre que cette station est particulièrement simple et qu'elle ne nécessite aucune opération préalable puisque le berceau orientable se trouve automatiquement placé dans la position appropriée, à la fin de chaque opération de connexion ou de déconnexion.

Bien entendu, certaines modifications peuvent être apportées au mode de réalisation qui vient d'être décrit. Ainsi, le loquet 54 peuvent être remplacé par tout autre organe de verrouillage connu remplissant la même fonction. Les deux broches 52 et les deux crochets 50 peuvent aussi être remplacés par une seule broche et un seul crochet, ces deux organes présentant alors une plus grande largeur.

## Revendications

1. Dispositif de raccordement déconnectable d'une genouillère (16) sur un bras esclave (10, 14) de télémanipulateur, ce bras esclave comprenant un fût (10a) présentant un axe longitudinal et une extrémité ouverte dans laquelle sont montés des pignons menants (26a, 26b, 26c) d'axe (24) perpendiculaire audit axe longitudinal, et la genouillère (16) comprenant un boîtier (16a) supportant des pignons menés (30a, 30b, 30c) autour d'un axe transversal (28) adjacent à une ouverture du boîtier, et une tige (38, 40, 48) support de pince d'axe orthogonal audit axe transversal, montée dans le boîtier (16a) par un axe d'articulation (34) parallèle audit axe transversal (28), le dispositif de raccordement (15) reliant le boîtier (16a) au fût (10a) de telle sorte que l'ouverture du boîtier soit adjacente à l'extrémité ouverte du fût, les pignons menants et menés engrénés deux à deux avec leurs axes orientés parallèlement et situés dans un plan contenant l'axe longitudinal du bras, et l'axe d'articulation de la tige support de pince situé d'un côté de ce plan, ce dispositif (15) étant caractérisé en ce qu'il comprend :

– au moins une broche (52) fixée au boîtier (16a) de la genouillère, selon un axe parallèle à l'axe d'articulation (34) de la tige support de la pince et situé du même côté que cet axe d'articulation par rapport audit plan, au-delà de ladite ouverture ;

– au moins un crochet rigide (50) fixé sur le fût (10a) et faisant saillie au-delà de son extrémité ouverte, pour venir encercler ladite broche (52) sous l'effet d'un pivotement relatif entre la genouillère (16) et l'extrémité du bras autour de l'axe de la broche ; et

– des moyens (54, 58, 60) de verrouillage du boîtier (16a) sur l'extrémité ouverte du fût (10a), situés du côté opposé par rapport audit plan.

2. Dispositif selon la revendication 1, caractérisé en ce que les moyens de verrouillage comprennent un loquet (54) articulé sur le boîtier (16a), autour d'un axe (56) parallèle à l'axe d'articulation (34) de la tige support de pince, ce loquet présentant une extrémité recourbée (54a) en saillie, apte à pénétrer dans un logement (58) formé à l'extrémité du fût (10a), sous l'action de moyens élastiques (60).

3. Dispositif selon l'une quelconque des revendications 1 et 2, caractérisé en ce qu'il comprend deux broches (52) faisant saillie selon un axe commun de part et d'autre du boîtier (16a) et deux crochets (50) fixés sur le fût (10a) pour venir encercler chacune desdites broches.

4. Dispositif selon l'une quelconque des revendications 1 à 3, caractérisé en ce que chaque crochet (50) est tourné du côté opposé audit plan et délimite un évidement (50a) approximativement semi-circulaire apte à encercler une partie de la broche (52) opposée à ladite ouverture.

5. Dispositif selon l'une quelconque des revendications 1 à 4, caractérisé en ce que le boîtier (16a) de la genouillère (16) comporte des organes (64) de positionnement de cette dernière dans un berceau orientable (72) d'une station de déconnexion (70).

6. Dispositif selon les revendications 2 et 5, caractérisé en ce que le berceau orientable (72) comprend une butée (93) dégageant automatiquement l'extrémité recourbée (54a) du loquet dudit logement (58) à l'encontre des moyens élastiques (60), lorsque les organes de positionnement (64) sont placés dans le berceau.

## Patentansprüche

1. Vorrichtung zum lösbaren Verbinden eines Scharniers (16) an einem mechanischen Arm (10, 14) eines Manipulators, wobei der mechanische Arm einen Schaft (10a) aufweist, der eine Längsachse bildet und ein offenes Ende besitzt, in dem Antriebsräder (26a, 26b, 27c) gelagert sind, deren Achsen (24) senkrecht zu der Längsachse verlaufen, und wobei das Scharnier (16) ein Gehäuse (16a) aufweist, in dem angetriebene Zahnräder (30a, 30b, 30c) auf einer an eine Gehäuseöffnung angrenzenden Querachse (28) drehbar gelagert sind, und einen Stützschaft (38, 40, 48) für den Greifer mit zur Querachse orthogonaler Achse, wobei der Stützschaft in dem Gehäuse (16a) mittels eines zur Querachse (28) parallelen Gelenkbolzens (34) befestigt ist, wobei die Verbindungseinrichtung (15) das Gehäuse (16a) mit dem Schaft (10a) derart verbindet, daß die Öffnung des Gehäuses am offenen Ende des Schafts anliegt, derart, daß die antreibenden und angetriebenen Zahnräder mit ihren parallel ausgerichteten und in einer die Längsachse des Arms beinhaltenden Ebene liegenden Achse jeweils paarweise ineinandergreifen, und wobei der Gelenkbolzen des Stützschafts des Greifers mit einer Seite in dieser Ebene liegt und diese Vorrichtung (15) **dadurch gekennzeichnet** ist, daß sie aufweist :

    – wenigstens ein am Gehäuse (16a) des Scharniers befestigter Zapfen (52) mit einer zum Gelenkbolzen (34) des Greiferstützschafts parallelen Achse, welche bezüglich der genannten Ebene auf der gleichem Seite liegt wie der Gelenkbolzen, diesseits der Öffnung,

    – wenigstens einem starren Haken (50), der am Schaft (10a) befestigt ist und über dessen offenes Ende hinaus hervorsteht, um bei einer relativen Schwenkbewegung zwischen dem Scharnier (16) und dem Ende des Armes die Zapfenachse zu umfassen ; und

    – Verriegelungseinrichtungen (54, 58, 60) für das Gehäuse (16a) am offenen Ende des Schafts (10a), welche bezüglich der Ebene auf der gegenüberliegenden Seite angeordnet sind.

2. Vorrichtung nach Anspruch 1, **dadurch gekennzeichnet,** daß die Verriegelungseinrichtungen eine an dem Gehäuse (16a) angelenkte Klinke (54) aufweisen, die um eine zum Gelenkbolzen (34) des Greiferstützschafts parallele Achse (56) schwenkbar ist, wobei die Klinke ein umgebogenens hervorstehendes Ende (54a) aufweist und unter der einwirkung elastischer Elemente (60) in eine am Ende des Schafts (10a) gebildete Aussparung (58) einrastbar ist.

3. Vorrichtung nach den Ansprüchen 1 oder 2, **dadurch gekennzeichnet,** daß sie zwei entlang einer gemeinsamen Achse auf beiden Seiten des Gehäuses (16a) hervorstehende Zapfen (52) und zwei auf dem Schaft (10a) befestigte Haken (50) zum Umfassen jedes der beiden Zapfen aufweist.

4. Vorrichtung nach einem der Ansprüche 1 bis 3, **dadurch gekennzeichnet,** daß jeder Haken (50) zu der der Ebene abgewandten Seite abgebogen ist und eine in etwa halbkreisförmige Aussparung (50a) begrenzt, die geeignet ist, einen Bereich des der Öffnung gegenüberliegenden Zapfens (52) zu umfassen.

5. Vorrichtung nach einem der Ansprüche 1 bis 4, **dadurch gekennzeichnet,** daß das Gehäuse (16a) des Scharniers (16) Elemente (64) zur Positionierung für letzteres in einer ausrichtbaren Halterung einer Entriegelungseinrichtung (70) aufweisen.

6. Vorrichtung nach den Ansprüchen 2 oder 5, **dadurch gekennzeichnet,** daß die ausrichtbare Halterung (72) einen Anschlag (93) aufweist, der automatisch die Verbindung des abgebogenen Endes (54a) der Klinke mit der Aussparung (58) entgegen der Wirkung dar elastischen Elemente (60) löst, wann die Positionierelemente (64) in der Halterung plaziert werden.

**Claims**

1. Device for the disconnectable coupling of a toggle joing (16) to a telemanipulator slave arm (10, 14), the latter having a shaft (10a) with a longitudinal axis and an open end in which are mounted driving gears (26a, 26b, 26c) whose axis is perpendicular to said longitudinal axis (24), and the toggle joint (16) having a case (16a) supporting driven gears (30a, 30b, 30c) about a transverse axis (28) adjacent to an opening of the case and a gripper support rod (38, 40, 48) having an axis orthogonal to said transverse axis mounted in the case (16a) by a pivot pin (34) parallel to said transverse axis (28), the coupling device (15) connecting the case (16a) to the shaft (10a) in such a way that the opening of the case is adjacent to the open end of the shaft, the pairwise meshed driving and driven gears with their parallel oriented axes are located in a plane containing the longitudinal axis of the arm and the pivot pin of the gripper support rod located on one side of said plane, said device (15) being characterized in that it comprises :

    – at least one spindle (52) fixed to the toggle joint case (16a) in accordance with an axis parallel to the pivot pin (34) of the gripper support rod and located on the same side as said pivot pin with respect to said plane beyond said opening ;

    – at least one rigid hook (50) fixed to the shaft (10a) and projecting beyond its open end so as to encircle said spindle (52) under the effect of a relative pivoting between the toggle joint (16) and the end of the arm about the axis of the spindle ; and

    – means (54, 58, 60) for locking the case (16a) to the end of the shaft (10a) located on the opposite side with respect to said plane.

2. Device according to claim 1, characterized in that the locking means incorporate a latch (54) articulated to the case (16a) about a pin (56) parallel to the pivot pin (34) of the gripper support rod, said latch having a projecting curved end (54a) able to penetrate a recess (58) formed at the end of shaft (10a) under the action of elastic means (60).

3. Device according to either of the claims 1 and 2, characterized in that it comprises two spindles (52) projecting in accordance with a common axis on either side of case (16a) and two hooks (50) fixed to shaft (10a) in order to encircle each of the said spindles.

4. Device according to any one of the claims 1 to 3, characterized in that each hook (50) is turned from the opposite side to said plane and defines a slot (50a), which is approximately semicircular and encircles part of the spindle (52) opposite to said opening.

5. Device according to any one of the claims 1 to 4, characterized in that the case (16a) of toggle joint (16) has members (64) for positioning the latter in an orientable cradle (72) of a disconnection station (70).

6. Device according to claims 2 and 5, characterized in that the orientable cradle (72) comprises an abutment (93) automatically disengaging the curved latch end (54a) from siad recess (58) in opposition to elastic means (60), when the positioning members (64) are placed in the cradle.

FIG. 2

FIG. 1

# FIG. 3

# FIG. 4

FIG. 5a

FIG. 5b

FIG. 5c

EP 0 292 384 B1